Europäisches Patentamt

European Patent Office

Office européen des brevets

(19)

(11) Numéro de publication: **0 513 464 A1**

# (12) DEMANDE DE BREVET EUROPEEN

(21) Numéro de dépôt: **91500060.8**

(22) Date de dépôt: **07.06.91**

(51) Int. Cl.⁵: **G09B 29/10, G01B 3/02**

(30) Priorité: **08.05.91 ES 9101125**

(43) Date de publication de la demande:
**19.11.92 Bulletin 92/47**

(84) Etats contractants désignés:
**AT BE CH DE DK FR GB GR IT LI LU NL SE**

(71) Demandeur: **Sanz Burgos, Rafael**
**Diego de Léon, 22**
**E-28006 Madrid(ES)**

(72) Inventeur: **Sanz Burgos, Rafael**
**Diego de Léon, 22**
**E-28006 Madrid(ES)**

(74) Mandataire: **Fernandez de Bethencourt,**
**Marcos**
**C/Goya, 127-1o**
**E-28009 Madrid(ES)**

(54) **Echelle circulaire pour plans et cartes.**

(57) ECHELLE CIRCULAIRE POUR PLANS ET CAR-
TES qui permet à l'utilisateur de vérifier avec précision la distance qui le sépare du lieu où il se trouve,
sur un plan ou carte déterminée, à l'endroit ou point
où il se dirige, distance mesurée à différentes échelles; pour effectuer ladite vérification il suffit de placer
le corps laminaire transparent de l'échelle sur le plan
ou carte, en repérant le point où se trouve l'utilisateur à l'aide de la loupe (3) et en y mettant ensuite
le centre (4) du sous-corps circulaire (1), en vérifiant
avec quelle circonférence contrique coïncide le point
de destination --ou à proximité de quelle circonférence il se trouve-- et il suffira alors de relever la
distance ou mesure correspondant à ladite circonférence.

FIG.-1

Le mémoire descriptif qui est développé ci-après concerne un Brevet d'Invention relatif à une ECHELLE CIRCULAIRE POUR PLANS ET CARTES.

L'échelle qui fait l'objet de la présente invention apporte des perfectionnements et des améliorations notables par rapport aux modèles antérieurs connus d'échelles se trouvant recueillis et classés dans l'état de la technique.

Les modèles d'échelles qui sont mentionnés dans l'état de la technique consistent pour la plupart en des corps rigides de différents formats, les plus courants étant ceux en forme de règles planes rectangulaires comportant des échelles différentes sur chacun des bords correspondant aux grands côtés et sur chacune de leurs faces.

Quelques autres modèles des plus courants sont ceux définis par des corps prismatiques, à section triangulaire ou quadrangulaire, qui présentent les cotes dans les différents systèmes ou échelles sur chacun des bords des arêtes de chacune de leurs faces.

Tous ces modèles en matériau rigide présentent différents inconvénients pratiques. En premier lieu, du fait de leur rigidité et de leur format, ce genre d'échelles sont difficiles à manipuler en ce sens qu'ils exigent que le plan ou la carte soit parfaitement déployé et repose sur une surface plane et rigide, ce qui fait que de telles échelles ne permettent pas de prendre des mesures et de calculer des échelles sur le terrain, c'est-à-dire dans des situations où l'utilisateur se trouve, par exemple, en train de parcourir les rues d'une ville ou en pleine campagne et doit relever les mesures séance tenante, directement sur le plan soutenu simplement par ses mains et sans la moindre possibilité de l'appuyer sur une surface rigide. Une autre incommodité ou désavantage de ce genre d'échelles est qu'elles exigent de l'utilisateur une certaine pratique pour effectuer les mesures et les proportions aux échelles de manière rapide et souple.

D'autre part, ce genre d'échelles ne permet qu'une seule mesure en ligne droite.

Un autre modèle d'échelle relevé dans l'état de la technique est une échelle qui surpassait et perfectionnait les modèles antérieurs connus, dont l'inventeur est le même que celui de l'échelle faisant l'objet du présent mémoire et qui a été déposé au Registre espagnol où il se trouve inscrit en bonne et due forme dans la modalité des modèles d'utilité, qui concerne exactement une échelle semi-circulaire pour plans-guides ou de situation.

Cette échelle présentait l'avantage remarquable, par rapport aux modèles antérieurs connus, d'être réalisée en matière plastique synthétique, au corps laminaire, translucide, aux dimensions réduites, et partant, extrêmement maniable.

De même, son système d'échelles, à base de cercles concentriques définissant un corps semi-circulaire, rendait extrêmement simple le calcul des distances au moyen de ses échelles.

D'autre part, elle permettait de mesurer les distances de tous les points situés dans chacune des demi-circonférences, en prenant pour centre le point où se trouvait l'utilisateur lui-même, à la différence des échelles rigides et droites qui ne peuvent établir des distances qu'en ligne droite et ne fournissent qu'un seul paramètre sur cette ligne, ce qui représente un énorme avantage de mesure de la part du modèle d'échelle semi-circulaire.

Ce genre d'échelle constituait une importante innovation car elle apportait les avantages mentionnés de l'énorme facilité d'utilisation dans n'importe quelle circonstance, compte tenu du fait que la nature laminaire, souple et transparente de l'échelle permettait à celle-ci de s'adapter extrêmement facilement sur n'importe quel plan et quelle que soit la façon dont celui-ci était examiné, tout en assurant la même facilité et fiabilité de vérification, aussi bien si le plan pouvait être appuyé sur une surface plane et rigide que s'il était examiné en l'air, simplement soutenu par les mains de l'utilisateur. De la même manière, les dimensions très précises de l'échelle précitée permettaient à l'utilisateur de la transporter aisément dans sa poche, en toute commodité et sécurité, ce genre d'échelles présentant l'avantage fondamental mentionné ci-dessus de la facilité, de la simplicité et de la sécurité pour obtenir les données et les proportions des échelles, en permettant ainsi de connaître les distances réelles sur le plan.

Après avoir rappelé les différents moyens connus jusqu'à présent d'échelles relevés dans l'état de la technique, signalons que celle du présent Brevet d'Invention objet de ce document est une invention nouvelle,qui implique une activité inventive consistant à donner à un objet, et plus concrètement une échelle, une configuration, une structure et une constitution dont découle un avantage notable et pratiquement appréciable concernant son usage et sa fabrication.

Plus concrètement, le Brevet d'Invention d'échelle circulaire pour plans et cartes qui fait l'objet du présent document consiste en un corps laminaire transparent, pouvant être fabriqué dans des matériaux tels que de l'acétate, du polycarnate, du P.V.C., du glaspack et autres, dans lequel corps monobloc se trouvent définis trois éléments ou composants essentiels. L'élément ou sous-corps principal circulaire, qui définit l'échelle proprement dite car sur cette surface se trouvent matérialisées les différentes échelles que peut contenir ce modèle. Un autre sous-corps essentiel du modèle est constitué par une prolongation rectangulaire, disposée de manière parfaitement symétrique, qui est la continuation naturelle périphérique du demi-corps circulaire. Ce sous-corps semi-rectangulaire comporte sur sa surface une bande rectangulaire à la section légèrement courbe convexe, tangente en un point au semi-corps circulaire et qui consiste en une lentille grossissante ou loupe pour faciliter la vision du plan de la part de l'utilisateur, du fait du grossissement évident qu'elle implique.

Le sous-corps circulaire principal peut contenir diverses échelles qui pourraient être définies en divisant la surface circulaire en secteurs circulaires et en matérialisant dans chaque secteur circulaire ainsi obtenu une échelle différente. Cela dit, après avoir signalé cette possibilité évidente de l'invention objet du présent document, pour permettre de mieux comprendre l'invention on a créé un prototype spécial --et pour ainsi dire emblématique-- comportant quatre échelles coïncidant chacune avec un quart de cercle, ce qui revient à dire qu'on a divisé la surface du cercle en quatre secteurs circulaires identiques et que, dans chacun de ces secteurs circulaires définis par deux diamètres parfaitement orthogonaux, on a établi quatre échelles.

Le mode d'emploi du brevet d'invention ne saurait être plus simple. Ainsi, l'échelle circulaire peut être saisie par sa prolongation rectangulaire, après quoi on la pose sur le plan à consulter et, grâce à la loupe qu'elle comporte, on peut repérer avec précision l'endroit où se trouve l'utilisateur, de même que le point de destination. Cette opération effectuée, on déplace l'échelle sur le plan jusqu'à ce que le point du plan où se trouve à ce moment-là l'utilisateur coïncide exactement avec le centre du sous-corps circulaire de l'échelle. L'acte suivant consiste à faire tourner l' échelle autour de ce centre jusqu'au quart de cercle correspondant à l'échelle que l'on veut consulter, en faisant coïncider le quart de cercle de l'échelle choisie avec la surface du plan où se trouve le point de destination.

Après avoir situé le point de situation de l'utilisateur au centre exact du sous-corps circulaire et après avoir repéré le point de destination dans le quart de cercle de l'échelle choisie, on connaîtra exactement la distance qui sépare l'utilisateur du point de destination en la calculant à partir des différents arcs de cercle se trouvant dans chacun des quarts de cercle et correspondant à des distances en mètres ou en kilomètres, selon l'échelle choisie.

En partant du fait que le point ou distance zéro est le centre ou l'endroit où se trouve situé l'utilisateur, le calcul est simple: selon que le point de destination se trouve situé à proximité ou dans la coïncidence de l'un des arcs de cercle correspondant à des mesures exactes, on connaît la distance en mètres ou en kilomètres qui sépare l'utilisateur de ce point de destination et, dans la mesure où quelques unes des échelles comportent même des calculs approximatifs de temps pour parvenir aux différents points, à partir du calcul du temps mis par une personne marchant normalement pour parcourir une distance déterminée, on pourra même connaître le temps approximatif que l'on tardera à marcher jusqu'à atteindre le point de destination désiré.

Dans les exemples emblématiques employés pour faciliter la compréhension des caractéristiques et du fonctionnement de l'échelle, on a utilisé les échelles E 1/10.000, E 1/15.000, E 1/250.000 et E 1/500.000, lesquelles sont par ailleurs les plus habituelles et les plus utiles couramment pour les utilisateurs de plans soit urbains soit topographiques.

L'échelle circulaire objet du présent document comporte d'autres avantages importants en ce qui concerne les sous-corps restants; tel l'avantage évident qu'apporte l'incorporation de la lentille grossissante ou loupe rectangulaire, mais il convient également de signaler celui qu'implique la prolongation du corps rectangulaire, essentiellement prévu pour être saisi mais qui, du fait de ses caractéristiques, peut parfaitement servir pour incorporer des messages informatifs de tout genre pour l'utilisateur, voire même des données renseignants sur différentes échelles, etc...

Il découle clairement de ce qui vient d'être exposé que l'échelle circulaire pour plans qui fait l'objet du présent document comporte les avantages fondamentaux suivants:

1.- L'avantage de son format réduit et de sa maniabilité qui permet de la transporter en toute commodité et sécurité dans une poche, dans la propre serviette de l'utilisateur, sans risque de détérioration du fait qu'il s'agit d'un corps souple.

2.- Qu'il s'agit d'un corps essentiellement transparent qui, de par sa nature laminaire, est d'un poids pratiquement imperceptible, ce qui permet de le poser aisément sur le plan à consulter et de le tenir très facilement tout en permettant à l'utilisateur d'examiner à travers lui la surface du plan.

3.- L'avantage d'incorporer une grande lentille de grossissement ou loupe rectangulaire, située de manière stratégique, offre à l'utilisateur l'énorme utilité pratique de pouvoir contempler les plus petits détails au format le plus infime du plan avec une netteté absolue, tels que par exemple la numérotation des rues et le nom de celles-ci ou toute autre donnée aux mêmes caractéristiques.

4.- La définition des différentes échelles au moyen de cercles concentriques entraîne une énorme facilité de calcul des distances réelles tout en permettant de vérifier les distances de vastes zones, c'est-à-dire aussi bien celles coïncidant avec les traits des arcs que les zones comprises dans les trapèzes circulaires définis par deux arcs de l'échelle et leurs extrémités latérales.

5.- L'incorporation de plusieurs échelles, voire même avec la mention de calcul de temps approximatifs de parcours à pied, permet parfaitement à l'utilisateur de connaître les distances exactes entre deux points du plan, en mètres ou en kilomètres, et ce toujours avec la plus grande précision, tout en lui permettant de connaître de manière approximative le temps qui sera mis à parcourir à pied la distance mesurée.

6.- La présente échelle remplit une autre importante fonction consistant à servir de compas, ce qui est matérialisé par de petits trous définis sur les circonférences concentriques en ligne avec le petit trous pratiqué au centre de l'échelle. Son mode d'emploi consiste à "planter" ou mettre un crayon ou tout autre objet analogue dans le petit trou de la circonférence concentrique en question et, en s'en servant comme centre, de définir des cercles correspondant à des zones présentant de l'intérêt pour l'utilisateur.

Pour permettre de mieux comprendre la portée du Brevet d'Invention faisant l'objet de la présente demande d'enregistrement sont annexées trois planches de dessins sur lesquelles sont illustrées les définitions les plus emblématiques de la présente invention.

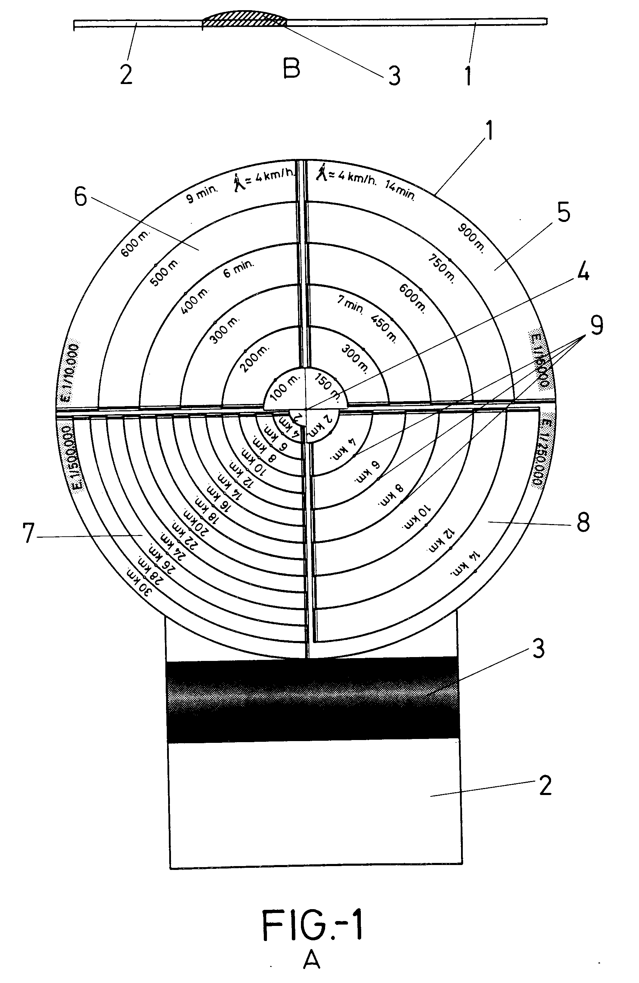

Sur la figure 1 est illustrée la définition la plus emblématique de la présente invention, soit celle de l'échelle qui comporte les quatre échelles les plus courantes et utiles.

Cette figure comporte deux vues: la vue A qui est une vue en plan de l'échelle sur laquelle, sous le repère (1) se trouve référencié le sous-corps circulaire. Sous le repère (2) se trouve référencié le sous-corps rectangulaire ou sur face de saisie, lequel peut comporter des messages ou renseignements présentant de l'intérêt pour l'utilisateur.

Sous le repère (3) est référenciée la loupe, de forme rectangulaire oblongue et au volume à section semi-cylindrique. Sous le repère (4) se trouve référencié le centre de l'échelle qui est le point zéro ou l'origine de toutes les échelles et que l'on doit faire coïncider avec le point où se trouve l'utilisateur, au moment où celui-ci consulte le plan. Sous le repère (5) se trouve référencié le quart de cercle ou secteur circulaire comportant l'échelle E 1/15000.

Sous le repère (6) se trouve référencié le quart de cercle ou secteur circulaire comportant l'échelle 1/10.000. Sous le repère (7) est référencié le secteur circulaire où figure l'échelle 1/500.000 et sous le repère (8) est référencié le secteur circulaire ou quart de cercle comportant l'échelle 1/250.000. Sous le repère (9) se trouvent référenciés les petits trous qui ont été pratiqués sur chacune des différentes circonférences concentriques,en ligne avec celui figurant au centre de l'échelle, grâce auxquels peut être exécutée la fonction de compas.

La vue B est une vue de profil de l'échelle sur laquelle on peut apprécier parfaitement sa nature de corps laminaire et qui illustre notamment, sous le repère (3), la loupe à section légèrement courbe convexe.

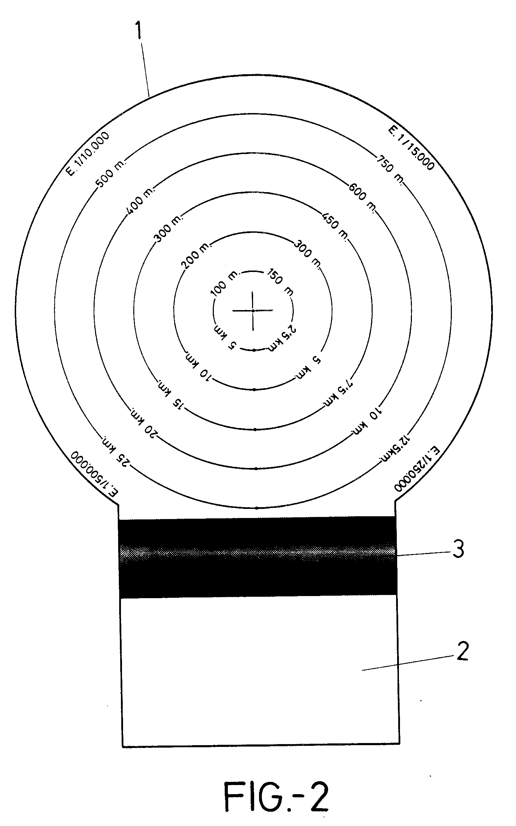

La figure 2 représente une autre version sous laquelle peut se présenter l'échelle, la variante consistant en ce qu'elle présente six circonférences concentriques ménagées sur sa surface qui correspondent cependant à quatre échelles différenciées disposées suivant deux diamètres disposés orthogonalement bien qu'obliquement, en définissant un X à partir de la position de l'observateur.

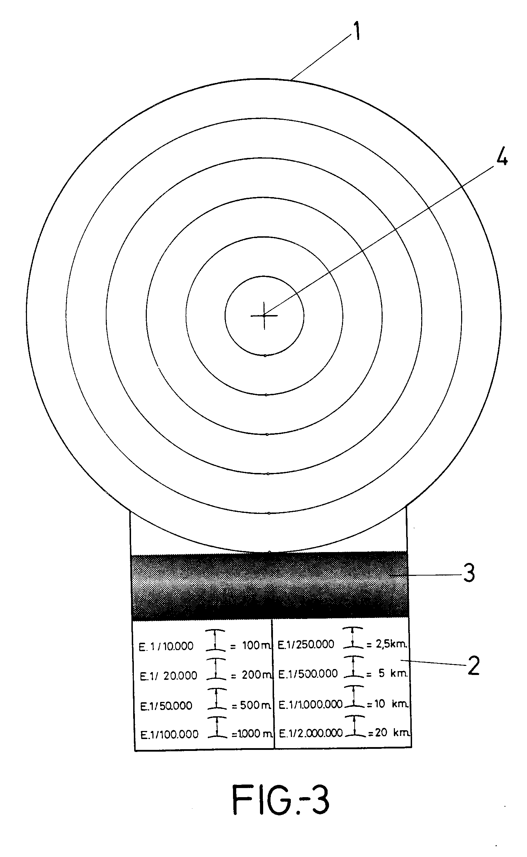

La figure 3 représente une autre définition possible de l'échelle circulaire dans laquelle, sur la surface circulaire (1), sont définies six circonférences concentriques séparées selon des rayons proportionnels; parallèlement, sur la surface de saisie rectangulaire (2) se trouvent mentionnées huit échelles et, à côté de chacune d'entre elles, se trouve la mesure en mètres ou en kilomètres correspondant à chacune des six circonférences concentriques d'après chacune des huit échelles mentionnées.

Il n'est pas jugé nécessaire de poursuivre plus avant cette description pour que tout expert en la matière puisse comprendre aisément la portée de l'invention et les avantages qui en découlent; les matériaux, la forme, la taille et l'agencement des différents étant susceptibles de variations pour autant que cela ne porte pas atteinte à l'essence de l'invention.

Les termes qui ont été employés tout au long de ce descriptif devront être pris dans leur sens le plus large et non limitatif.

**Revendications**

1. ECHELLE CIRCULAIRE POUR PLANS se caractérisant par sa forme définie par un corps monobloc laminaire en matériau souple transparent (figure 1) dans lequel est défini un sous-corps principal circulaire (1) divisé en quatre quarts de cercle ou secteurs circulaires, au moyen de deux diamètres parfaitement orthogonaux, chacun des quarts de cercle comportant différentes échelles (5), (6), (7), (8), dont l' origine des mesures et le centre du cercle (4). Faisant suite au sous-corps précédent se trouve disposé verticalement un corps rectangulaire (2), une lentille grossissante ou loupe (3), à la section légèrement courbe convexe, se trouvant dans la zone adjacente au sous-corps circulaire (1) et en disposition horizontale oblongue. D'autres petits trous (9)- ,sur les différentes circonférences concentriques,figurent en ligne avec le petit cercle du centre (4) de l'échelle.

2. ECHELLE CIRCULAIRE POUR PLANS, selon la revendication 1 se caractérisant par sa forme de corps monobloc (figure 2) et dont les dimensions géométriques sont identiques à celle de la figure 1, mais qui présente la singularité consistant en ce que, sur la surface circulaire (1), sont concrétisées six circonférences concentriques,aux rayons parfaitement proportionnels, sur lesquelles sont définies diamétralement quatre échelles différentes, en configurant un X à partir de la position de l'observateur.

3. ECHELLE CIRCULAIRE POUR PLANS, selon les revendications 1 et 2, se caractérisant par sa forme de corps monobloc aux dimensions identiques à ceux des figures 1 et 2 mais qui présente la singularité ou variation consistant en ce que, sur la surface circulaire (1), sont définies exclusivement six circonférences concentriques aux rayons parfaitement proportionnels et en ce que, sur la surface rectangulaire (2) --divisée en deux moitiés-- sont définies au total huit échelles, avec la correspondance en mesures que chacune définit par rapport aux circonférences concentriques.

**FIG.-1**

A

FIG.-2

| | |
|---|---|
| E. 1 / 10.000 $\perp$ = 100 m. | E.1/250.000 $\perp$ = 2,5 km. |
| E.1/ 20.000 $\perp$ = 200 m. | E.1/500.000 $\perp$ = 5 km. |
| E.1/50.000 $\perp$ = 500 m. | E.1/1.000.000 $\perp$ = 10 km. |
| E.1/100.000 $\perp$ = 1.000 m. | E.1/2.000.000 $\perp$ = 20 km. |

FIG.-3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 124 538 (ECONO MO SYSTEMS  E. SCHERF) <br> * Titre; figure * <br> * page 5, alinéa 3 - page 6, alinéa 3 * <br> --- | 1-3 | G09B29/10 <br> G01B3/02 |
| X | DE-U-8 703 480 (GEO-VERLAG KARIN ARNOLD) <br> * page 7, ligne 1 - page 9, ligne 15; figures 1-4 * <br> --- | 1-3 | |
| X | US-A-4 057 902 (ATSUSHI MATSUI) <br> * colonne 2, ligne 8 - colonne 4, ligne 18; figures 1-6 * <br> --- | 1-3 | |
| A | GB-A-1 541 008 (R.G. SINCLAIR;  P. SINCLAIR) <br> * Ensemble du brevet; figures 1-3 * <br> --- | 1-3 | |
| A | CH-A-315 629 (H. VÖGELI) <br> * Ensemble du brevet; figure * <br> ----- | 3 | |

**DOMAINES TECHNIQUES RECHERCHES (Int. Cl.5)**

G09B
G01B

Le présent rapport a été établi pour toutes les revendications

| Lieu de la recherche | Date d'achèvement de la recherche | Examinateur |
|---|---|---|
| LA HAYE | 27 AVRIL 1992 | VISSER F.P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P0402)